Europäisches Patentamt

European Patent Office

Office européen des brevets

(11) Veröffentlichungsnummer: **0 469 669 A2**

# (12) EUROPÄISCHE PATENTANMELDUNG

(21) Anmeldenummer: **91201920.5**

(22) Anmeldetag: **22.07.91**

(51) Int. Cl.5: **H04L 1/00**, H04B 17/02

(30) Priorität: **30.07.90 DE 4024115**

(43) Veröffentlichungstag der Anmeldung:
**05.02.92 Patentblatt 92/06**

(84) Benannte Vertragsstaaten:
**DE ES FR GB IT SE**

(71) Anmelder: **Philips Patentverwaltung GmbH**
**Wendenstrasse 35 Postfach 10 51 49**
**W-2000 Hamburg 1(DE)**
㊻ **DE**

Anmelder: **N.V. Philips' Gloeilampenfabrieken**
**Groenewoudseweg 1**
**NL-5621 BA Eindhoven(NL)**
㊻ **ES FR GB IT SE**

(72) Erfinder: **Herrmann, Karl, Dr.**
**Narzissenstrasse 13**
**W-8501 Eckental(DE)**

(74) Vertreter: **Peuckert, Hermann, Dipl.-Ing. et al**
**Philips Patentverwaltung GmbH**
**Wendenstrasse 35 Postfach 10 51 49**
**W-2000 Hamburg 1(DE)**

(54) **Digitales Übertragungssystem mit Degenerator zur Fehlerübertragung.**

㊄ 2.1. Die Erfindung betrifft ein digitales Übertragungssystem mit einer ersten Leitungsendstelle (LE1) am Anfang eines Leitungsabschnittes, mit einer zweiten Leitungsendstelle (LE2) am Ende des Leitungsabschnittes und mit mindestens einem zwischen der ersten und zweiten Leitungsendstelle (LE1, LE2) einschaltbaren Regenerator (R1, R2...RN), wobei mindestens ein Byte der über den Leitungsabschnitt übertragenen Information eine in eine Übertragungsrichtung übertragene Fehlerinformation (F1) enthält. Dabei soll auf einfache Weise eine verbesserte Ortung auftretender Fehler ermöglicht werden.

2.2. Es wird vorgeschlagen, daß die Fehlerinformation in beide Übertragungsrichtungen übertragen wird. Gravierende Fehler sollen mit Priorität gegenüber den Einzelbitfehlermeldungen übertragen werden.

FIG.1

Die Erfindung betrifft ein digitales Übertragungssystem mit einer ersten Leitungsendstelle am Anfang eines Leitungsabschnittes, mit einer zweiten Leitungsendstelle am Ende des Leitungsabschnittes und mit mindestens einem zwischen der ersten und zweiten Leitungsendstelle einschaltbaren Regenerator, wobei mindestens ein Byte der über den Leitungsabschnitt in einer Übertragungsrichtung übertragbaren Information eine Fehlerinformation enthält.

Die Leitungsausrüstungen von digitalen Übertragungssystemen bestehen in der Regel aus sende- und empfangsseitigen Leitungsendstellen und aus zwischengeschalteten Regeneratoren. Dabei übernehmen die Leitungsendstellen die Anpassung der Digitalsignale an die Eigenschaften des Übertragungsmediums, z.B. elektrisch-optische Wandlung, während die Regeneratoren der Erneuerung der Digitalsignale dienen, um einen erforderlichen Signal-Rauschabstand einzuhalten. Auch in den Leitungsendstellen ist ein Regenerieren der Digitalsignale notwendig. Darüber hinaus können in den Leitungsendstellen mit Hilfe von Multiplexverfahren mehrere Digitalsignale einer Hierarchiestufe der sogenannten Synchronen Digitalen Hierarchie (SDH) in ein Digitalsignal der nächst höheren Hierarchiestufe zusammengefaßt werden.

Aus der Empfehlung G.smux-3, (künftige G.783, CCITT), Appendix I, Seite 54 vom Februar 1990 ist ein digitales Übertragungssystem mit einer ersten Leitungsendstelle am Anfang eines Leitungsabschnittes, mit einer zweiten Leitungsendstelle am Ende des Leitungsabschnittes und mit drei zwischen der ersten und zweiten Leitungsendstelle einschaltbaren Regeneratoren bekannt. Dabei wird ein Byte der über den Leitungsabschnitt übertragenen Information als Fehlerinformation zur Ortung eines fehlerhaften Regenerators bzw. Leitungsabschnittes verwendet. Zwei Bits des die Fehlerinformation enthaltenden Bytes sind für die Angabe von vier Statuszuständen vorgesehen, während die restlichen sechs Bits zur individuellen Adressierung, d.h. zur Identifizierung des Regenerators, verwendet werden. Die Übertragung der Fehlerinformation erfolgt lediglich in einer Übertragungsrichtung. Die erste Leitungsendstelle am Anfang eines Leitungsabschnittes setzt den Code für den Normalzustand in das betreffende Byte ein. Ein fehlerfreier Regenerator gibt das Byte unverändert an den nächsten Abschnitt weiter. Erkennt ein Regenerator dagegen einen Fehler, so überschreibt er das Byte mit der codierten Fehlermeldung und setzt seine eigene Adresse in die Bits zur Identifizierung ein. Die zweite Leitungsendstelle am Ende eines Leitungsabschnittes detektiert diese Fehlermeldung und generiert daraus lokale Alarme. Über das sogenannte Telecommunications Management Network TMN können auch Alarmmeldungen an ein Operations System OS abgesetzt werden.

Der Erfindung liegt die Aufgabe zugrunde, ein digitales Übertragungssystem der eingangs genannten Art anzugeben, das auf einfache Weise eine verbesserte Ortung auftretender Fehler ermöglicht.

Diese Aufgabe wird bei einem digitalen Übertragungssystem der eingangs genannten Art dadurch gelöst, daß die Fehlerinformation vom Regenerator in beide Übertragungsrichtungen übertragbar ist.

Dabei setzt beispielsweise ein fehlerhafter Regenerator eine Fehlermeldung nicht nur in das betreffende Byte in der Übertragungsrichtung ein, in der der Fehler aufgetreten ist, sondern auch in das entsprechende Byte der Gegenrichtung. Zur Unterscheidung der Richtungen wird ein Bit zur Identifizierung des Regenerators verwendet. Hierdurch wird gewährleistet, daß auch am anderen Ende eines Leitungsabschnittes der Ort und die Art des Fehlers bekannt sind. Dies kann für die nach dem Auftreten eines Fehlers notwendigen Reperaturarbeiten sehr hilfreich sein. Insbesondere dann, wenn die beiden Leitungsendstellen geographisch weit auseinanderliegen, können auftretende Fehler schneller und einfacher geortet werden.

Bei einer Ausgestaltungsform ist durch zwei Bit des die Fehlerinformation enthaltenden Bytes die Statusinformation eines Fehlers, durch ein Bit die Fehlerrichtung und durch fünf Bit die Adresse zur Identifizierung des Regenerators oder der Leitungsendstelle angebbar. Dabei ermöglichen die zwei Bit zur Angabe der Statusinformation eines Fehlers die Angabe von vier Zuständen des Regenerators, d.h. von einem Normalzustand und von drei Fehlerzuständen. Ein Bit kennzeichnet die Richtung der gesendeten Fehlerinformation, so daß fünf Bit als Adreßfeld zur Identifizierung des Regenerators übrigbleiben. Hiermit ist eine Identifizierung von $2^5$ Regeneratoren bzw. Leitungsendstellen möglich.

Bei einer anderen Ausgestaltungsform ist die Fehlerinformation sowohl in den Leitungsendstellen als auch in den Regeneratoren auswertbar. Dadurch ist es für das Servicepersonal möglich, in jeder Regeneratorstation, z.B. durch Auswerten der übertragenen Fehlerortungsinformation in einem angeschlossenen PC, einen Überblick über den Zustand der gesamten Leitungsstrecke zu gewinnen. Dies kann insbesondere bei der genaueren Fehlersuche sowie bei deren Beseitigung sehr hilfreich sein.

Bei einer weiteren Ausgestaltungsform sind aus der Statusinformation mehrere Zustände detektierbar, wobei mindestens ein detektierter Zustand bevorzugt übertragbar ist. Sind aus der Statusinformation die Zustände "Normal", "hohe Fehlerrate", "Signal-/Synchronverlust" und "Einzelbitfehler" detektierbar, so können die Zustände "hohe Fehlerrate" und "Signal-/Synchronverlust" gegenüber den Zuständen "Normal" und "Einzelbitfehler" bevorzugt übertragen werden. Dabei kann die Fehlermeldung "Einzelbitfehler" beispielsweise dann in das betreffende Byte eingesetzt werden, wenn in einem frei zu wählendem Zeitintervall ein oder mehrere Bitfehler erkannt wurden. Da jeder Regenerator mit einem Fehlerzustand die Fehlermeldungen von vorher aufgetretenen Fehlermeldungen überschreibt, werden die Fehlermeldungen, die gravierende Funktionsstörungen enthalten, wie beispielsweise "hohe Fehlerrate" und "Signal-/Synchronverlust" mit Priorität gegenüber den Einzelbitfehlermeldungen übertragen. Diese wichtigen Fehlermeldungen werden damit auch beim Auftreten von Einzelbitfehlern an den nächsten Regenerationsabschnitt weitergereicht, die Meldung der Einzelbitfehler wird unterdrückt.

Im folgenden wird die Erfindung anhand des in den Figuren dargestellten Ausführungsbeispiels näher erläutert.

Fig. 1 zeigt ein digitales Übertragungssystem.

Fig. 2 zeigt ein Beispiel eines die Fehlerinformation enthaltenden Bytes.

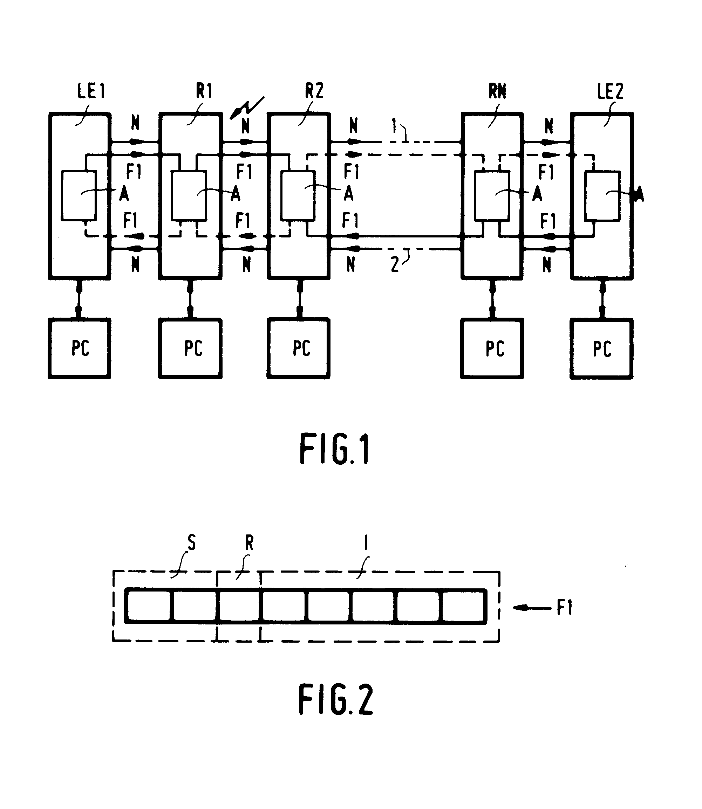

Das in Fig. 1 dargestellte digitale Übertragungssystem zeigt einen Leitungsabschnitt mit einer ersten Leitungsendstelle LE1 am Anfang und einer zweiten Leitungsendstelle LE2 am Ende des Leitungsabschnittes. Zwischen der ersten und zweiten Leitungsendstelle LE1, LE2 sind Regeneratoren R1, R2...RN eingeschaltet. An die beiden Leitungsendstellen LE1, LE2 sowie die Regeneratoren R1, R2...RN sind Personal-Computer PC anschließbar. Bei dem in Fig. 1 dargestellten Ausführungsbeispiel wird über, beispielsweise als Glasfaserkabel ausgebildete, Übertragungsleitungen 1, 2 eine Nutzinformation N zwischen der ersten Leitungsendstelle LE1, den Regeneratoren R1, R2...RN und der zweiten Leitungsendstelle LE2 übertragen. Die erste und zweite Leitungsendstelle LE1, LE2 sowie die Regeneratoren R1, R2...RN weisen eine Auswerteeinrichtung A zur Auswertung einer in beide Übertragungsrichtungen übertragenen Fehlerinformation F1 auf.

Die erste Leitungsendstelle LE1 am Anfang des Leitungsabschnittes setzt den Code für den Normalzustand in das Byte für die Fehlerinformation F1 ein. Ein "fehlerfreier" Regenerator gibt die Fehlerinformation F1 unverändert an den nächsten Abschnitt weiter. Erkennt ein Regenerator dagegen einen Fehler, so überschreibt dieser das Byte mit der codierten Fehlermeldung und setzt seine eigene Adresse in das Adreßfeld zur Identifizierung ein. Dabei setzt der "fehlerhafte" Regenerator die Fehlermeldung nicht nur in das betreffende Byte in der Richtung ein, in der der Fehler aufgetreten ist, sondern auch in das entsprechende Byte der Gegenrichtung.

So ist bei dem in Fig. 1 dargestellten Ausführungsbeispiel durch einen Pfeil gekennzeichnet, daß zwischen den Regeneratoren R1, R2 auf der Übertragungsleitung 1 eine Störung auftritt. Der zweite Regenerator erkennt diese Störung und überschreibt die empfangene Fehlerinformation und sendet die Fehlerinformation F1 sowohl über die Übertragungsleitung 1 in die Richtung, in der der Fehler auch aufgetreten ist, und darüber hinaus auch in die entgegengesetzte Richtung auf der Übertragungsleitung 2. Dies ist bei dem in Fig. 1 dargestellten Ausführungsbeispiel durch die gestrichelt eingezeichneten Verbindungsleitungen zur Übertragung der Fehlerinformation F1 zwischen den Regeneratoren F2, RN und der Leitungsendstelle LE2 sowie in entgegengesetzter Richtung entsprechend zwischen den Regeneratoren R2, R1 und der ersten Leitungsendstelle LE1 angedeutet. Zur Unterscheidung der Fehlerrichtung, d.h. der Richtung, in der der Fehler aufgetreten ist, wird ein Bit der Fehlerinformation F1 verwendet. Dadurch wird gewährleistet, daß auch am anderen Ende der Leitungsstrecke der Ort und die Art des Fehlers bekannt sind. Dies kann für die nach dem Auftreten eines Fehlers notwendigen Reparaturarbeiten sehr hilfreich sein. Insbesondere dann, wenn beide Enden geographisch weit auseinanderliegen, kann damit eine schnelle Fehlerortung erfolgen. Da insbesondere in der Einführungsphase der Synchronen Digitalen Hierarchie SDH ein flächendeckendes Telecommunications Management Network TMN in den meisten Fällen noch nicht vorhanden sein wird, ist auch die zentrale Erfassung des Fehlerortes in einem Operation System OS vielfach nicht möglich. In diesem Fall ist es von entscheidender Bedeutung, den Zugang zur Fehlerinformation an beiden Enden einer Leitungsstrecke zu erhalten. Die Auswertung der Inhalte der Fehlerinformation F1 in den Auswerteeinrichtungen A erfolgt bei dem in Fig. 1 dargestellten Ausführungsbeispiel nicht nur in den beiden Leitungsendstellen LE1, LE2, sondern auch in den zwischengeschalteten Regeneratoren R1, R2...RN. Durch Auswerten der übertragenen Fehlerinformation F1 in dem angeschlossenen Personal-Computer PC wird ein Überblick über den Zustand der gesamten Leitungsstrecke gewonnen. Dies ist insbesondere bei der genaueren Fehlersuche sowie deren Beseitigung sehr hilfreich.

Die Fig. 2 zeigt ein Beispiel eines die Fehlerinformation F1 enthaltenden Bytes. Dabei werden zwei Bits des Bytes F1 für die Statusinformation S eines Fehlers, d.h. die Angabe von vier Zuständen des Regenerators bzw. des Leitungsabschnittes, verwendet. Ein Bit im Feld R kennzeichnet die Richtung eines aufgetretenen Fehlers. Die Identifizierung I des Regenerators erfolgt mit Hilfe der verbleibenden fünf Bits der Fehlerinformation F1.

Dabei ermöglichen die zwei Bits zur Angabe der Statusinformation S eines Fehlers die Angabe von vier Zuständen. So wird beispielsweise durch die Statusinformation 00 der Zustand "Normal", durch die Statusinformation 01 der Zustand "hohe Fehlerrate", z.B. größer $10^{-6}$, durch die Statusinformation 10 der Zustand "Signal-/Synchronverlust" und durch die Statusinformation 11 der Zustand "Einzelbitfehler" angezeigt. Durch den Digitalwert 1 kann bei dem in Fig. 2 dargestellten Ausführungsbeispiel einer Fehlerinformation F1 angezeigt werden, daß der Fehler in Übertragungsrichtung aufgetreten ist, durch den Digitalwert 0 wird die entsprechende Gegenrichtung angezeigt. Die verbleibenden fünf Bits der Fehlerinformation F1 dienen zur Identifizierung des Regenerators bzw. der Leitungsendstelle. Hiermit ist eine Identifizierung von $2^5$-Regeneratoren bzw. Leitungsendstellen möglich. Bei einer Ausgestaltungsform ist es möglich, daß die Zustände "hohe Fehlerrate" und "Signal-/Synchronverlust" bevorzugt übertragen werden. Somit werden die Fehlermeldungen, die gravierende Funktionsstörungen enthalten, mit Priorität gegenüber den Einzelbitfehlermeldungen übertragen. In diesem Fall werden diese wichtigen Fehlermeldungen auch beim Auftreten von Einzelbitfehlern an den nächsten Regenerator weitergereicht, während die Meldung der Einzelbitfehler unterdrückt wird.

**Patentansprüche**

1. Digitales Übertragungssystem mit einer ersten Leitungsendstelle (LE1) am Anfang eines Leitungsabschnittes, mit einer zweiten Leitungsendstelle (LE2) am Ende des Leitungsabschnittes und mit mindestens einem zwischen der ersten und zweiten Leitungsendstelle (LE1, LE2) einschaltbaren Regenerator (R1, R2...RN), wobei mindestens ein Byte der über den Leitungsabschnitt in einer Übertragungsrichtung übertragbaren Information eine Fehlerinformation (F1) enthält, dadurch gekennzeichnet, daß die Fehlerinformation (F1) vom Regenerator (R1, R2...RN) in beide Übertragungsrichtungen übertragbar ist.

2. Übertragungssystem nach Anspruch 1, dadurch gekennzeichnet, daß durch zwei Bit des die Fehlerinformation (F1) enthaltenden Bytes die Statusinformation (S) eines Fehlers, durch ein Bit die Fehlerrichtung (R) und durch fünf Bit die Identifizierung (I) des Regenerators (R1, R2...RN) oder der Leitungsendstelle (LE1, LE2) angebbar ist.

3. Übertragungssystem nach einem der Ansprüche 1 oder 2,

dadurch gekennzeichnet, daß die Fehlerinformation (F1) sowohl in den Leitungsendstellen (LE1, LE2) als auch in den Regeneratoren (R1, R2...RN) auswertbar ist.

4. Übertragungssysten nach einem der Ansprüche 1 bis 3, dadurch gekennzeichnet, daß aus der Statusinformation (S) mehrere Zustände detektierbar sind, wobei mindestens ein detektierter Zustand bevorzugt übertragbar ist.

5. Übertragungssystem nach einem der Ansprüche 1 bis 4, dadurch gekennzeichnet, daß aus der Statusinformation (S) die Zustände "Normal", "hohe Fehlerrate", "Signal-/Synchronverlust" und "Einzelbitfehler" detektierbar sind, wobei die Zustände "hohe Fehlerrate" und "Signal-/Synchronverlust" gegenüber dem Zustand "Normal" und "Einzelbitfehler" bevorzugt übertragen werden.

6. Regenerator (R1, R2 ...RN) und/oder Leitungsendstelle (LE1, LE2) für ein digitales Übertragungssystem, wobei der Regenerator (R1, R2 ... RN) zwischen eine erste Leitungsendstelle (LE1) am Anfang eines Leitungsabschnittes und eine zweite Leitungsendstelle (LE2) am Ende des Leitungsabschnittes einschaltbar ist und mindestens ein Byte der über den Leitungsabschnitt in einer Übertragungsrichtung übertragbaren Information eine Fehlerinformation (F1) enthält, dadurch gekennzeichnet, daß die Fehlerinformation (F1) zwischen Leitungsendstelle (LE1, LE2) und Regenerator (R1, R2 ...RN) bzw. zwischen zwei Regeneratoren (R1, R2 ...RN) in beide Übertragungsrichtungen übertragbar ist.

7. Regenerator und/oder Leitungsendstelle nach Anspruch 6, dadurch gekennzeichnet, daß durch zwei Bit der Fehlerinformation (F1) enthaltenden Bytes die Statusinformation (S) eines Fehlers, durch ein Bit die Fehlerrichtung (R) und durch fünf Bit die Identifizierung (I) des Regenerators (R1, R2...RN) bzw. oderLeitungsendstelle (LE1, LE2) angebbar ist.

8. Regenerator und/oder Leitungsendstelle nach einem der Ansprüche 6 oder 7, dadurch gekennzeichnet, daß die Fehlerinformation im Regenerator (R1, R2 ...RN) bzw. in den Leitungsendstellen (LE1, LE2) auswertbar ist.

9. Regenerator und/oder Leitungsendstelle nach einem der Ansprüche 6 bis 8, dadurch gekennzeichnet, daß aus der Statusinformation (S) mehrere Zustände detektierbar sind, wobei mindestens ein detektierter Zustand bevorzugt übertragbar ist.

10. Regenerator und/oder Leitungsendstelle nach einem der Ansprüche 6 bis 9, dadurch gekennzeichnet, daß aus der Statusinformation (S) die Zustände "Normal", "hohe Fehlerrate", "Signal-/Synchronverlust" und "Einzelbitfehler" detektierbar sind, wobei die Zustände "hohe Fehlerrate" und "Signal-/Synchronverlust" gegenüber dem Zustand "Normal" und "Einzelbitfehler" bevorzugt übertragen werden.

FIG.1

FIG.2